Europäisches Patentamt

European Patent Office

Office européen des brevets

(19)

(11) **EP 1 548 084 A1**

(12) **EUROPEAN PATENT APPLICATION**
published in accordance with Art. 158(3) EPC

(43) Date of publication:
**29.06.2005 Bulletin 2005/26**

(51) Int Cl.⁷: **C09K 3/10**, F02F 11/00,
F16J 15/10, F16J 15/12,
C08J 7/04, C08L 33/00,
C08K 5/541

(21) Application number: **03751324.9**

(22) Date of filing: **03.10.2003**

(86) International application number:
**PCT/JP2003/012717**

(87) International publication number:
**WO 2004/031316 (15.04.2004 Gazette 2004/16)**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **04.10.2002 JP 2002291913**

(71) Applicants:
• **Nok Corporation
Tokyo 105-8585 (JP)**
• **KANEKA CORPORATION
Osaka-shi, Osaka 530-8288 (JP)**

(72) Inventors:
• **SENDA, Kazuhisa, NOK Corporation
Fujisawa-shi, Kanagawa 251-0042 (JP)**
• **NAKAGAWA, Yoshiki, Kaneka Corporation
Settsu-shi, Osaka 566-0072 (JP)**

(74) Representative: **HOFFMANN EITLE
Patent- und Rechtsanwälte
Arabellastrasse 4
81925 München (DE)**

(54) **METAL- OR RESIN-UNITED GASKET**

(57)    A metal- or resin-integrated gasket, which comprises a cured product layer of a composition comprising (A) an acrylic polymer having at least one alkenyl group capable of undergoing hydrosilylation reaction, (B) a hydrosilyl group-containing compound and (C) a hydrosilylation catalyst as essential components, and a metal plate or a resin plate, the cured product layer being provided on at least one surface of the metal plate or the resin plate. The metal- or resin-integrated gasket has distinguished heat resistance and oil resistance and also a good environmental adaptability without using any organic solvent and thus is used as a suitable gasket for automobile engine cylinder heads, engine oil pans or engine intake-exhaust manifolds.

EP 1 548 084 A1

**Description**

TECHNICAL FIELD

The present invention relates to a metal- or resin-integrated gasket, and more particularly to a metal- or resin-integrated gasket with distinguished heat resistance and oil resistance and also with a distinguished environmental adaptability.

BACKGROUND ART

Recent demands for higher performance of automobile parts and environmental consideration to automobile parts have given rise to further improvement of heat resistance and oil resistance of components of products and also development of products without using any organic solvents or processes using organic solvent as little as possible.

Conventional metal- or resin-integrated gaskets with a desired heat resistance have been produced by a process, which comprises dissolving nitrile rubber in an organic solvent, applying the resulting solution to the surface of a metal plate or resin plate, removing the organic solvent therefrom by drying and vulcanizing the unvulcanized thin rubber layer thereon. To improve the heat resistance, it is possible to change rubber material species to be used, for example, from nitrile rubber to acrylic rubber or fluororubber with a higher heat resistance and select a suitable organic solvent for the selected rubber species. In view of the recent environmental consideration, use of the organic solvent must be avoided, if possible, even though the organic solvent is to be recovered.

DISCLOSURE OF THE INVENTION

An object of the present invention is to provide a metal- or resin-integrated gasket with distinguished heat resistance and oil resistance and also with a distinguished environmental adaptability without using any organic solvent.

The object of the present invention can be attained by a metal- or resin-integrated gasket, which comprises a cured product layer of a composition comprising (A) an acrylic polymer having at least one alkenyl group capable of undergoing hydrosilylation reaction, (B) a hydrosilyl group-containing compound and (C) a hydrosilylation catalyst as essential components, and a metal plate or a resin plate, the cured product layer being provided on at least one surface of the metal plate or the resin plate.

The metal- or resin-integrated gasket in the afore-mentioned structure can be formed by directly applying the afore-mentioned composition to the surface of an adhesive-coated metal plate or resin plate, followed by curing.

The metal plate for use in the present invention includes stainless steel plates, mild steel plates, copper plates, brass plates, aluminum plates, aluminum die-cast plates, etc., and preferable are steel plates of SUS304, SUS301 and SUS430 grades, etc. The resin plate includes plates of resins having a softening point of 100°C or higher such as polyamide resin, polyphenylene sulfide resin, polyether ether ketone resin, liquid crystal polymers, etc. The plate thickness is usually about 0.1 to about 5mm, since the plate is used for gaskets.

The metal plate or the resin plate is coated with any adhesive with a good vulcanization adhesiveness to an acrylic polymer for use in the present invention, but incapable of inhibiting hydrosilylation reaction of the acrylic polymer, for example, resin-based adhesives such as phenol resin-based adhesives, epoxy resin-based adhesives, etc., or adhesives based on a reactive functional group-containing compound such as a silane coupling agent or isocyanate compound. The adhesive as applied to the metal surface or resin surface is air dried and then preferably heat treated at about 25° - about 200°C for 5-30 minutes before use.

The afore-mentioned composition comprising a component (A), a component (B) and a component (C) as essential components is directly applied to the surface of the adhesive-coated metal plate or resin plate. The application can be carried out by knife coating, gravure coating, etc. When the viscosity of composition is too high to conduct the application, the viscosity of composition can be adjusted by dilution with a small amount of an organic solvent such as a ketone type solvent, for example, methyl ethyl ketone, etc, or an ester type solvent, for example, butyl acetate, etc.

An acrylic acid ester monomer, which constitutes the main chain of acrylic polymer having at least one alkenyl group capable of undergoing hydrosilylation reaction, preferably at least one alkenyl group at a terminal position of the polymer, as Component (A), is not particularly limited, and can be used upon selection of desired one.

For example, such acrylic acid ester monomers can be used as acrylic acid esters such as methyl acrylate, ethyl acrylate, propyl acrylate, isopropyl acrylate, n-butyl acrylate, isobutyl acrylate, t-butyl acrylate, n-pentyl acrylate, n-hexyl acrylate, cyclohexyl acrylate, n-heptyl acrylate, n-octyl acrylate, 2-ethylhexyl acrylate, nonyl acrylate, decyl acrylate, dodecyl acrylate, phenyl acrylate, tolyl acrylate, benzyl acrylate, 2-methoxyethyl acrylate, 3-methoxybutyl acrylate, 2-hydroxyethyl acrylate, 2-hydroxypropyl acrylate, stearyl acrylate, glycidyl acrylate, 2-aminoethyl acrylate, trifluoromethylmethyl acrylate, 2-trifluoromethylethyl acrylate, 2-perfluoroethylethyl acrylate, 2-perfluoroethyl-2-perfluorobutylethyl acrylate, perfluoroethyl acrylate, perfluoromethyl acrylate, diperfluoromethylmethyl acrylate, 2-perfluoromethyl-2-perfluoroethylethyl acrylate, 2-perfluorohexylethyl acrylate, 2-perfluorodecylethyl acrylate, 2-perfluorohexadecylethyl acrylate, etc., or methacrylic acid esters corresponding thereto, ethylene oxide adducts of acrylic acid, γ-(methacryloyloxypropyl)-trimethoxysilane, etc.

Above all, acrylic acid esters or methacrylic acid esters can be preferably used from the viewpoint of product physical properties, etc. It is particularly preferable to use one or a combination of at least two of acrylic acid esters, for example, butyl acrylate, ethyl acrylate, 2-methoxyethyl acrylate, 2-ethoxyethyl acrylate, etc. Acrylic acid or methacrylic acid can be also used.

In the present invention, these preferable monomers can be subjected to random copolymerization or block copolymerization with other monomers, where it is preferable that acrylic acid esters or methacrylic acid esters as the preferable monomers are copolymerized in a proportion of 60% by weight or more.

Together with these acrylate-based or methacrylate-based monomers, other monomers can be subjected to the copolymerization in a proportion of about 30% by weight or less. Such monomers include, for example, styrene-based monomers such as styrene, vinyltoluene, α-methylstyrene, chlorostyrene, styrenesulfonic acid or its salts, etc.; fluorine-containing vinyl monomers such as perfluoroethylene, perfluoropropylene, vinylidene fluoride, etc.; silicon-containing vinyl-based monomers such as vinyltrimethoxysilane, vinyltriethoxysilane, etc.; maleic acid anhydride, maleic acid and monoalkyl esters or dialkyl esters of maleic acid; fumaric acid and monoalkyl esters or dialkyl esters of fumaric acid; maleimide-based monomers such as maleimide, methylmaleimide, ethylmaleimide, propylmaleimide, butylmaleimide, hexylmaleimide, octylmaleimide, dodecylmaleimide, stearylmaleimide, phenylmaleimide, cyclohexylmaleimide, etc.; nitrile group-containing vinyl-based monomers such as acrylonitrile, methacrylonitrile, etc.; amide group-containing vinyl-based monomers such as acrylamide, methacrylamide, etc.; vinyl esters such as vinyl acetate, vinyl propionate, vinyl pivalate, vinyl benzoate, vinyl cinnamate, etc.; olefins such as ethylene, propylene, etc.; conjugated dienes such as butadiene, isoprene, etc.; vinyl chloride, vinylidene chloride, allyl chloride, allyl alcohol, etc.

At least one alkenyl group capable of undergoing hydrosilylation reaction is introduced into the acrylic polymer, preferably at a terminal position of the polymer, resulting from the copolymerization of these monomers. The introduced alkenyl group can be represented by the following general formula:

$$CH_2=C(R)-$$

where R is a hydrogen atom or an organic group having 1-20 carbon atoms. The organic group includes, for example, alkyl groups having 1-20 carbon atoms, aryl groups having 6-20 carbon atoms, aralkyl groups having 7-20 carbon atoms, etc. In view of the reactivity with the hydrosilyl group-containing compounds, an alkenyl group whose R is a hydrogen atom or a methyl group, preferably a hydrogen atom, is introduced.

Introduction of the alkenyl group can be carried out by the following methods:

(a) A method of allowing a compound having one alkenyl group of higher polymerizability and another alkenyl group of lower polymerizability together in the molecule, represented by the following general formula:

$$CH_2=CR^1-R^2-R^3-CR^1=CH_2$$

$R^1$ :    a hydrogen atom or a methyl group
$R^2$ :    an ester group or an o-, m- or p-phenylene group where in case of an ester group, the compound is a (meth)acrylate-based compound and in case of a phenylene group, the compound is a styrene-based compound
$R^3$ :    an organic group of $C_1-C_{20}$, which may be directly bonded or may have at least one ether bond,

such as $CH_2=CHCOO(CH_2)nCH=CH_2$, $CH_2 C(CH_3)COO(CH_2)nCH=CH_2$, o-, m- or p-divinyl benzene, etc. to react with the desired acrylic monomer in the synthesis of acrylic polymers by living radical polymerization,

(b) A method of subjecting a compound having at least two alkenyl groups of lower polymerizability as a second monomer, that is, a compound represented by the following general formula:

$$CH_2=CR^1-R^4-CR^1=CH_2$$

$R^1$ :    a hydrogen atom or a methyl group
$R^4$ :    an organic group of $C_1-C_{20}$, which may have at least one ether bond,

such as 1,5-hexadiene, 1,7-octadiene, 1,9-decadiene, etc. to reaction at the final stage of polymerization reaction or after the completion of reaction of the desired monomer in the synthesis of acrylic polymers by living radical polymerization, the method being much easier of controlling the alkenyl groups to be introduced into one molecule, and

(c) A method of replacing the halogen atom in the acrylic polymer with an alkenyl group such as a method of replacing the halogen atom in the polymer with an alkenyl group by allowing various organometallic compounds having an alkenyl group to act on acrylic polymers having at least one halogen atom.

Number of alkenyl groups to be introduced into the acrylic polymers by these methods is 1-10, preferably 2-8 per polymer molecule.

Acrylic polymers having the alkenyl group for use in the present invention are generally in a liquid state at the ordinary temperature with a number average molecular weight Mn of 500 or more, preferably 1,000-100,000. The lower the molecular weight, the less appear the proper characteristics of the acrylic polymers, whereas the higher the molecular weight, the harder is the handling.

Molecular weight distribution of the acrylic polymers for use in the present invention, that is, a ratio of weight average molecular weight to number average molecular weight (Mw/Mn), determined by gel permeation chromatography (GPC), is generally 1.8 or less, preferably 1.5 or less, more preferably 1.3 or less. A ratio of more than 1.8 is not preferable because of lowering of physical properties, etc. In the molecular weight determination by GPC, chloroform was used as a mobile phase in a polystyrene gel column, where the determination was made in terms of polystyrene.

The alkenyl-containing acrylic polymers can be produced by various polymerization processes. Though the processes are not particularly limited, radical polymerization processes are preferable from the viewpoint of monomer versatility and easy control. Among the radical polymerization processes, a living polymerization process is more preferable, and an atom transfer radical polymerization process is particularly preferable.

Generally, it has been deemed that reaction control of the radical polymerization reaction is hard to conduct, because of higher polymerization rate and easy occurrence of termination reaction due to coupling of radicals themselves, whereas the living radical reaction process has such characteristics that it can hardly suffer from side reactions such as termination reactions at growing chain ends in the polymer, etc. owing to use of a special polymerization system, and also can produce polymers of narrow molecular weight distribution (Mw/Mn : about 1.1- about 1.5) and furthermore can freely control the molecular weight by a charging ratio of an initiator to monomers.

Thus, the living polymerization process can not only produce polymers of narrow molecular weight distribution and, furthermore, low viscosity, when the resulting polymers are in a liquid state, but can also introduce monomers having a specific functional group into the polymers at substantially desired positions, and thus can be regarded as a preferable process for producing alkenyl-containing acrylic polymers.

In a narrow sense, the living polymerization process refers to polymerization capable of keeping molecular chains to grow, while always maintaining the terminals in an active state, but generally also covers a pseudo-living polymerization capable of keeping the molecular chain to grow under an equilibrium state of both inactivated terminals and activated terminals as well. The term "living polymerization process" used in the present invention refers to the latter one.

Hydrosilyl group-containing compound as component (B) is not particularly limited, so long as it is a curable compound by cross-linking with an acrylic polymers having at least one alkenyl group at the terminals as component (A), and includes, for example, compounds represented by the following general fomulae:

$$R^5{}_3SiO[SiR^5{}_2O]a[SiHR^6O]b[SiR^6R^7O]c \ SiR^6{}_3$$
$$R^5{}_2HSiO[SiR^5{}_2O]a[SiHR^6O]b[SiR^6R^7O]c \ SiHR^5{}_2$$

$R^5$, $R^6$ :     alkyl groups of $C_1$-$C_6$ or phenyl group
$R^7$ :          alkyl groups of $C_1$-$C_{10}$ or aralkyl groups

$0 \leqq a \leqq 100$
$2 \leqq b \leqq 100$
$0 \leqq c \leqq 100$

$$R^8, H, R^9 \;—\; (SiO)d(SiO)e(SiO)f \;—\; R^8, R^9, R^{10}$$

R$^8$, R$^9$ :     alkyl groups of $C_1$-$C_6$ or phenyl group
R$^{10}$ :     alkyl groups of $C_1$-$C_{10}$ or aralkyl groups

$$0 \leqq d \leqq 8$$
$$2 \leqq e \leqq 10$$
$$0 \leqq f \leqq 8$$
$$3 \leqq d+e+f \leqq 10$$

Above all, compounds such as linear polysiloxanes, cyclic siloxanes, etc. having at least 1.1 hydrosilyl groups in the molecule on average can be preferably used. Siloxane compounds having an alkyl group, a phenyl group, an alkylphenyl group, etc. besides the hydrosilyl groups are more preferable from the viewpoint of compatibility with acrylic polymers. One or also a combination of at least two of the hydrosilyl group-containing compounds can be used in the present invention.

The alkenyl-containing acrylic polymer and the hydrosilyl group-containing compound can be used by mixing in a desired proportion, but in view of curability they are used in a molar ratio of the alkenyl group of acrylic polymer to the hydrosilyl group of hydrosilyl group-containing compound of 5-0.2, preferably 2.5-0.4. In a molar ratio of more than 5, only tacky cured products of low strength will be obtained due to incomplete curing, whereas in a molar ratio of less than 0.2, a large amount of active hydrosilyl groups will remain in the cured products even after the curing, and uniformly cured products of sufficient strength will be no more obtained due to generation of cracks or voids.

Hydrosilylation catalyst as component (C) is also not particularly limited, and any desired catalyst can be used. It includes, for example, chloroplatinic acid, simple platinum, solid platinum supported on carriers such as alumina, silica, carbon black, etc., furthermore the following complexes such as:

| | |
|---|---|
| Platinum-vinylsiloxane complexes | $Ptn(CH_2=CHMe_2SiOSiMe_2CH=CH_2)n$ |
| | $Pt[(MeCH=CHSiO)_4]m$ |
| Platinum-phosphine complexes | $Pt(PPh_3)_4$ |
| | $Pt(PBu_3)_4$ |
| Platinum-phosphite complexes | $Pt[P(OPh)_3]_4$ |
| | $Pt[P(OBu)_3]_4$ |
| Me | methyl |
| Bu | butyl |
| Ph | phenyl |
| n, m | positive integers |

and other catalysts than the platinum compounds, e.g. $RhCl(PPh_3)_3$, $RhCl_3$, $Rh/Al_2O_3$, $RuCl_3$, $IrCl_3$, $FeCl_3$, $AlCl_3$, $PdCl_2 \cdot 2H_2O$, $NiCl_2$, $TiCl_4$, etc. Furthermore, platinum-hydrocarbon complex (US Patent No. 3,159,601 and US Patent No. 3,159,662), platinum-alcoholato complex (US Patent No. 3,220,972), etc. can be also used in the present invention. These hydrosilylation catalyst can be used alone or in combination of at least two thereof. Among these hydrosilylation catalysts, chloroplatinic acid, platinum-olefin complexes, platinum-vinylsiloxane complexes, etc. are preferable used from the viewpoint of catalyst activity.

The amount of the catalyst is also not particularly limited, and is used in a range of $10^{-1}$-$10^{-8}$ moles, preferably $10^{-2}$-$10^{-6}$ moles per mole of alkenyl group in the component (A) polymer. Generally, the hydrosilylation catalyst is expensive and corrosive, and sometimes can generate a large amount of hydrogen to produce foamed cured products. Thus, it is preferable not to use more than $10^{-1}$ mole.

If any one of these three essential components (A), (B) and (C) is not used, such inconveniences will be encountered as failing to obtain vulcanization molding products (cured products) or lowering of rubber elasticity or elongation of the product even if obtained.

The composition comprising the afore-mentioned essential components can be admixed, if necessary, with various rubber compounding ingredients usually used in the rubber industries such as a reinforcing agent, e.g. carbon black, white carbon, etc.; a filler, e.g. diatomaceous earth, talc, clay, graphite, calcium silicate, barium sulfate, calcium carbonate, magnesium carbonate, aluminium hydroxide, mica, etc.; a powdery solid filler, e.g. various metal powders, glass powders, ceramic powders, granular or powdery polymer, etc.; a small amount of thermoplastic resin or rubber for improving the abrasion resistance, moldability, etc., short-length fibers for improving the strength or rigidity, a processing aid, e.g. stearic acid, palmitic acid, paraffin wax, etc.; an acid acceptor, e.g. zinc oxide, magnesium oxide, etc.; antioxidants of amine series, phenol series, imidazole series, etc; a stabilizer, a plasticizer, a tackifier, a mold release agent, a flame retardant, pigments, etc. It is preferable from the operational viewpoint to use liquid compounding ingredients.

The composition can be admixed with a curing-adjusting agent such as 3,5-dimethyl-1-hexyne-3-ol, 3,5-dimethyl-1-hexyne-5-ol, etc. in a proportion of not more than about 5 parts by weight, preferably about 0.01-about 1 part by weight, to 100 parts by weight of sum total of components (A), (B) and (C). The curing-adjusting agent has a function of adjusting the curing rate and preventing scorch.

In view of the use for gaskets, it is preferable to make the surface hardness of cured product layer not more than 45. The cured products can be made to have a low hardness of not more than 45 in terms of Duro A hardness (according to JIS K6253) by adjusting mixing proportions of the various reinforcing agent, the filler, the plasticizer, etc. to the composition to various degrees, though cured products containing no such additives have a desired low hardness. It is not preferable to use a reinforcing agent or a filler containing sulfur, halogen, etc. that acts as a catalyst poison.

The composition can be prepared by kneading through a Banbury mixer, a planetary mixer, a Brabender mixer, a kneader, a high shearing type mixer, rolls, three-roll mill, etc. Then, the composition is applied to the surface of a metal plate or resin plate, followed by vulcanization molding by an injection molding machine, a compression molding machine, a vulcanization press, etc., usually with heating at about 100° - about 200°C for about 3- about 120 minutes, and, if necessary, by secondary vulcanization with heating at about 120° - about 200°C for about 1- about 24 hours.

BEST MODE FOR CARRYING OUT THE INVENTION

The present invention will be described below, referring to Example.

EXAMPLE

The surface of an SPCC steel plate with a surface roughness (Ra) of not more than 10 was defatted and coated with a phenol-based primer comprising 27 wt.% of hexamine-containing cresol novolak-type phenol resin and 73 wt.% of methyl ethyl ketone, followed by air drying and heat treatment at 180°C for 5 minutes.

After drying, the primer surface was coated with an acrylic polymer composition having the following composition by a knife coat method, followed by heat treatment at 180°C for 0.5 hours.

| Acrylic polymer | 100 parts by weight |
| White carbon (Aerosil R974, a product of Japan Aerosil Co.) | 25 parts by weight |
| Hydrosilyl group-containing compound | 6 parts by weight |
| Hydrosilylation catalyst | 0.05 parts by weight |
| Curing-adjusting agent (3,5-dimethyl-1-hexyne -3-ol) | 0.1 parts by weight |
| Antioxidant (Irganox 1010, a product of Ciba Specialty Chemical Co.) | 2 parts by weight |

The acrylic polymer used herein was a copolymer comprising butyl acrylate, ethyl acrylate and 2-methoxyethyl acrylate, further copolymerized with 1,7-octadiene to introduce alkenyl groups therein, and having a number average molecular weight Mn of 18,000, a molecular weight distribution (Mw/Mn) of 1.1 and average number of alkenyl groups introduced into one molecule of the copolymer being 1.9. The hydrosilyl group-containing compound used herein was a linear siloxane having 5 hydrosilyl groups on average and 5 $\alpha$-methylstyrene groups on average in one molecule (amount of Si-H groups : 3.70 m moles/g). The hydrosilylation catalyst used herein was a xylene solution containing 3 wt.% of 1,1,3,3-tetramethyl-1,3-divinylsiloxane complex of zero-valent platinum.

The afore-mentioned acrylic polymer composition was compression molded at 180°C for 10 minutes, whereby a vulcanization product having the following physical properties was obtained :

| Normal state physical properties : | |
| --- | --- |
| Hardness (Duro A) | 40 |
| Tensile strength | 4.1MPa |
| Elongation | 160% |

| Heat resistance test (changes in physical properties after heating at 150°C for 70 hours) : | |
| --- | --- |
| Hardness change | +3 points |
| Percent tensile strength change | +21% |
| Percent elongation change | +5% |
| Compression set (150°C for 70 hours) : | 27% |

| Oil resistance (changes in physical properties after dipping in No.3 oil at 150°C for 70 hours) : | |
| --- | --- |
| Hardness change | -3 points |
| Percent tensile strength change | -16% |
| Percent elongation change | -13% |
| Percent volume change | +19.8% |
| Low-temperature characteristics (TR10): | -27°C |

Heat resistance evaluation of the steel plate-integrated acrylic polymer cured product (film thickness : 10 μm) was carried out according to a cross-cut peeling test (which comprising providing the surface at the acrylic cured product side of the metal-acrylic cured product laminate with eleven cut lines each in lateral and longitudinal directions within a range of square area of 10mm × 10mm at a pitch of 1mm by a cutter, placing the laminate with the cut lines into an oven at 150°C or 170°C for 70 hours or 300 hours, then taking out the laminate, adhering an adhesive tape on the cut square area and taking the tape off by peeling to visually observe the state of retained acrylic cured product : similar available evaluation method being a paint retainability evaluation method set forth by JIS K5600-5-6).

The resulting results are given in the following Table, where Comparative Example was a case of using a metal-vulcanized NBR laminate whose primer layer was coated with a medium-high nitrile NBR composition in place of the acrylic polymer composition of Example.

Table

| Heating condition | Example | Comp. Ex. |
| --- | --- | --- |
| No heating | no peeling | no peeling |
| 150°C for 70 hours | " | " |
| 150°C for 300 hours | " | peeling occurred |
| 170°C for 70 hours | " | " |
| 170°C for 300 hours | peeling occurred | " |

INDUSTRIAL UTILITY

The present metal- or resin-integrated gasket has distinguished heat resistance and oil resistance and can also attain sealing at a lower contact pressure on the gasket face, because the surface hardness of the cured product layer of hydrosilylated acrylic polymer can be made not more than 45 in terms of Duro A hardness. Furthermore, the present composition comprising components (A), (B) and (C) for use in forming a hydrosilylated acrylic polymer layer on a metal plate or resin plate can form a cured product layer having a uniform film thickness of about 1- about 500μm, preferably about 1- about 50 μm without using any organic solvent, and thus metal- or resin-integrated gaskets can be produced by a process posing less burden on the environment.

The present metal- or resin-integrated gasket with the afore-mentioned characteristics can be effectively used as gaskets applicable for sealing positions of various automobile machine parts such as automobile engine cylinder heads, engine oil pans, engine intake-exhaust manifolds, etc.

**Claims**

1.  A metal- or resin-integrated gasket, which comprises a cured product layer of a composition comprising (A) an acrylic polymer having at least one alkenyl group capable of undergoing hydrosilylation reaction, (B) a hydrosilyl group-containing compound and (C) a hydrosilylation catalyst as essential components, and a metal plate or a resin plate, the cured product layer being provided on at least one surface of the metal plate or the resin plate.

2.  A metal- or resin-integrated gasket according to claim1, wherein the component (A) of the composition is a liquid acrylic polymer having a number average molecular weight Mn of 500 or more and a molecular weight distribution (Mw/Mn) of 1.8 or less.

3.  A metal- or resin-integrated gasket according to claim 1, wherein the cured product layer has a film thickness of 1-500 µm.

4.  A metal- or resin-integrated gasket according to claim 1, wherein the cured product layer has a surface hardness (Duro hardness A) of not more than 45.

5.  A metal- or resin-integrated gasket according to claim 1, wherein the composition is directly applied to an adhesive-coated metal plate or resin plate and cured.

6.  A metal-integrated gasket according to claim 1, 2, 3 or 4 for use as a gasket for automobile engine cylinder heads, engine oil pans, or engine intake-exhaust manifolds.

7.  A resin-integrated gasket according to claim 1, 2, 3 or 4, wherein the resin plate has a softening point of 100°C or more.

# INTERNATIONAL SEARCH REPORT

| | |
|---|---|
| International application No. | |
| | PCT/JP03/12717 |

**A. CLASSIFICATION OF SUBJECT MATTER**
Int.Cl⁷ C09K3/10, F02F11/00, F16J15/10, F16J15/12, C08J7/04,
C08L33/00, C08K5/541

According to International Patent Classification (IPC) or to both national classification and IPC

**B. FIELDS SEARCHED**

Minimum documentation searched (classification system followed by classification symbols)
Int.Cl⁷ C09K3/10, F02F11/00, F16J15/10, F16J15/12, C08J7/04,
C08L33/00-33/26, C08L43/04, C08K5/541

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2000-154370 A (Kaneka Corp.),<br>06 June, 2000 (06.06.00),<br>Claims; Par. Nos. [0002], [0076] to [0078]<br>(Family: none) | 1-7 |
| Y | JP 2000-130587 A (Ishino Gasket Kogyo Kabushiki Kaisha),<br>12 May, 2000 (12.05.00),<br>Claims<br>(Family: none) | 1-7 |
| Y | EP 328675 A1 (NIPPON CARBON CO., LTD.),<br>23 August, 1989 (23.08.89),<br>Claims<br>& JP 1-33181 A<br>Claims | 1-7 |

☐ Further documents are listed in the continuation of Box C.   ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 05 November, 2003 (05.11.03) | 18 November, 2003 (18.11.03) |

| Name and mailing address of the ISA/ | Authorized officer |
|---|---|
| Japanese Patent Office | |
| Facsimile No. | Telephone No. |

Form PCT/ISA/210 (second sheet) (July 1998)